# EUROPÄISCHE PATENTANMELDUNG

(11) **EP 4 786 153 A2**
(43) Veröffentlichungstag der Anmeldung: **05.08.2026**
(21) Anmeldenummer: 25222880.4
(22) Anmeldetag: 12.12.2025
(51) Int. Cl.: B30B 15/06, A22C 7/00, B30B 15/26

(54) **PRESSWERKZEUG, ZUGEHÖRIGES BETRIEBSVERFAHREN UND PRESSVORRICHTUNG**

(30) Priorität: 14.01.2025 DE 102025101168
(71) Anmelder: Provisur Technologies, Inc., Mokena, IL 60448 (US)
(72) Erfinder: Seelhofer, Manuel, 9113 Degersheim (CH); Bossart, Lukas, 9200 Gossau (CH)
(74) Vertreter: v. Bezold & Partner Patentanwälte - PartG mbB

(57) **Zusammenfassung**

Die Erfindung betrifft ein Presswerkzeug (1) für eine Pressvorrichtung zum Pressen von Pressgut (z.B. Nahrungsmittelprodukte), mit einer Transponderkammer (2) in dem Presswerkzeug (1) und einem Transponder (3), der in der Transponderkammer (2) des Presswerkzeugs (1) angeordnet ist. Die Erfindung sieht vor, dass die Transponderkammer (2) im montierten Zustand des Transponders (3) nicht vollständig ausgefüllt ist, sondern eine Überdruckaufnahmekammer (7) aufweist, um den beim Einpressen des Transponders (3) in die Transponderkammer (2) entstehenden Überdruck aufzunehmen. Weiterhin umfasst die Erfindung ein zugehöriges Betriebsverfahren und eine entsprechend angepasste Pressvorrichtung.

## Beschreibung

### Technisches Gebiet der Erfindung

Die Erfindung betrifft ein Presswerkzeug für eine Pressvorrichtung zum Pressen von Pressgut (z.B. Nahrungsmittelprodukte). Weiterhin umfasst die Erfindung ein Betriebsverfahren für eine Pressvorrichtung mit einem solchen Presswerkzeug. Schließlich umfasst die Erfindung auch eine entsprechend angepasste Pressvorrichtung.

### Hintergrund der Erfindung

Aus dem Stand der Technik (z.B. EP 4 301 562 A2) sind Pressvorrichtungen bekannt, die dazu dienen, Nahrungsmittelprodukte zu pressen. Dies ist insbesondere dann vorteilhaft, wenn die Nahrungsmittelprodukte anschließend in Scheiben geschnitten werden sollen, da durch einen Pressvorgang auch bei Nahrungsmittelprodukten (z.B. Rohschinken) mit einer unregelmäßigen äußeren Produktkontur eine definierte Produktkontur erzeugt wird.

Es ist weiterhin aus dem Stand der Technik bekannt, in ein Presswerkzeug einer solchen Pressvorrichtung zum Pressen von Nahrungsmittelprodukten einen RFID-Transponder (RFID: Radio-frequency and identification) zu integrieren, damit die Pressvorrichtung das montierte Presswerkzeug erkennen kann.

Bei den bekannten Presswerkzeugen mit einem integrierten RFID-Transponder ist dieser üblicherweise in eine Transponderkammer in dem Presswerkzeug eingepresst. Im Betrieb derartiger Presswerkzeuge ist es jedoch vorgekommen, dass sich der eingepresste RFID-Transponder im Betrieb wieder aus der Transponderkammer löst, was verhindert werden muss. Nachteilig am Stand der Technik ist also die Gefahr, dass sich der in die Transponderkammer des Presswerkzeugs eingepresste RFID-Transponder ungewollt wieder löst.

Zum allgemeinen technischen Hintergrund der Erfindung ist hinzuweisen auf DE 10 2021 126 436 B3, US 2016 / 0 100 622 A1, DE 20 2020 102 536 U1, US 2021 / 0 397 919 A1, WO 2017 / 085 041 A1, EP 3 831 510 A1 und DE 195 10 458 A1.

### Beschreibung der Erfindung

Der Erfindung liegt also die Aufgabe zugrunde, ein entsprechend verbessertes Presswerkzeug mit einem Transponder zu schaffen.

Das erfindungsgemäße Presswerkzeug ist dazu ausgelegt, um in einer Pressvorrichtung Pressgut (z.B. Nahrungsmittelprodukte) zu pressen, wie es an sich aus dem Stand der Technik bekannt ist. Die Erfindung ist jedoch hinsichtlich des Pressguts nicht auf Nahrungsmittelprodukte beschränkt, sondern grundsätzlich auch beim Pressen von anderem Pressgut realisierbar.

In Übereinstimmung mit dem eingangs beschriebenen bekannten Stand der Technik weist auch das erfindungsgemäße Presswerkzeug eine Transponderkammer auf, um den Transponder aufzunehmen.

Die Erfindung beruht nun auf der technisch-physikalischen Erkenntnis, dass das im Stand der Technik vorkommende ungewollte Lösen des Transponders aus der Transponderkammer darauf beruht, dass beim Einpressen des Transponders in der Transponderkammer ein Überdruck entsteht, der im montierten Zustand des Transponders auf den Transponder wirkt und diesen im schlimmsten Fall wieder aus der Transponderkammer herausdrücken kann.

Bei dem erfindungsgemäßen Presswerkzeug ist die Transponderkammer deshalb im montierten Zustand des Transponders nicht vollständig ausgefüllt, sondern weist eine Überdruckaufnahmekammer auf, um den beim Einpressen des Transponders in die Transponderkammer entstehenden Überdruck aufzunehmen. Die Überdruckkammer verhindert also beim Einpressen des Transponders in die Transponderkammer, dass der entstehende Überdruck so weit ansteigt, dass er zum ungewollten Herauspressen des Transponders aus der Transponderkammer führen kann.

Bei einem bevorzugten Ausführungsbeispiel der Erfindung ist die Überdruckaufnahmekammer am Boden der Transponderkammer angeordnet. Beispielsweise kann die Überdruckaufnahmekammer die Transponderkammer am Boden der Transponderkammer als Ringnut ringförmig umgeben. Die Erfindung ist jedoch hinsichtlich der Form und Gestaltung der Überdruckkammer nicht auf eine Ringnut beschränkt.

Bei dem bevorzugten Ausführungsbeispiel der Erfindung ist der Transponder in einer topfförmigen Schutzkappe angeordnet, die gemeinsam mit dem Transponder als Paket in die Transponderkammer eingeführt ist und den Transponder mit ihrem Boden nach außen abdeckt. Die Schutzkappe kann hierbei mit ihrem Boden bündig mit der Oberfläche des Presswerkzeugs abschließen. Vorzugsweise besteht die Schutzkappe aus Kunststoff, damit die Schutzkappe den Transponder nicht elektromagnetisch abschirmt, was das drahtlose Auslesen des Transponders behindern würde.

Vorzugsweise weist die Schutzkappe an ihrem Umfangsrand außen mindestens ein Formschlusselement auf, das im montierten Zustand eine formschlüssige Verbindung mit einem entsprechenden komplementären Formschlusselement in der Transponderkammer herstellt und die Schutzkappe dadurch formschlüssig in der Transponderkammer verankert.

Beispielsweise kann es sich bei dem Formschlusselement an der Schutzkappe um einen Widerhaken handeln, der im montierten Zustand in der Überdruckaufnahmekammer verankert ist. Bei dem bevorzugten Ausführungsbeispiel der Erfindung sind in der äußeren Mantelfläche der Schutzkappe mehrere Widerhaken angeordnet, die in Einpressrichtung versetzt angeordnet sind.

Bei dem vorstehend erwähnten komplementären Formschlusselement in der Transponderkammer kann es sich beispielsweise um die Überdruckaufnahmekammer (z.B. Ringnut) handeln. Der Widerhaken an der Außenwand der Schutzkappe kann also in die Überdruckaufnahmekammer eingreifen, um die Schutzkappe zusammen mit dem Transponder formschlüssig in der Transponderkammer zu verankern.

Bei dem bevorzugten Ausführungsbeispiel der Erfindung ist der in die Schutzkappe eingelegte Transponder innen von einem Stopfen abgedeckt, der in die topförmige Schutzkappe eingepresst ist.

Hierbei kann der Transponder in der Schutzkappe in ein Medium eingebettet sein, insbesondere in ein elastisches Medium (z.B. Silikon). Dieses Medium kann den Zwischenraum zwischen der Schutzkappe einerseits und dem Stopfen andererseits vollständig ausfüllen, so dass der Transponder vollständig in das Medium eingebettet ist. Diese Einbettung des Transponders in dem elastischen Material (z.B. Silikon) ermöglicht eine mechanische Entkopplung des Transponders von äußeren Einflüssen wie Temperaturausdehnung, Deformierung, etc..

Darüber hinaus kann ein Anschlag vorgesehen sein, der beim Einpressen des Stopfens in die Schutzkappe die Einpressbewegung des Stopfens begrenzt und dadurch in der Schutzkappe einen definierten Aufnahmeraum für den Transponder bereitstellt. Beispielsweise kann der Anschlag an der Innenwand der Schutzkappe, an der Außenwand des Stopfens oder an einer Einpresshilfe angeordnet sein. Bei dem bevorzugten Ausführungsbeispiel der Erfindung ist dieser Anschlag als Absatz in der Innenwand der Schutzkappe realisiert.

Bei dem bevorzugten Ausführungsbeispiel der Erfindung bilden die Schutzkappe, der Transponder und der Stopfen also ein Paket, das gemeinsam in die Transponderkammer in dem Presswerkzeug eingepresst und/oder eingeklebt ist.

Die Fixierung der Schutzkappe in der Transponderkammer kann also sowohl reibschlüssig, formschlüssig als auch stoffschlüssig erfolgen. Die formschlüssige Verbindung wird beispielsweise durch den Widerhaken gebildet. Die reibschlüssige Verbindung wird dagegen durch die Reibung zwischen der Außenwand der Schutzkappe und der Innenwand der Transponderkammer gebildet. Die stoffschlüssige Verbindung wird dagegen durch die Klebeverbindung zwischen der Schutzkappe und der Innenwand der Transponderkammer gebildet. Die Verankerung der Schutzkappe kann also gleichzeitig durch drei verschiedene Verbindungsarten (reibschlüssig, formschlüssig und stoffschlüssig) erfolgen.

In einer Variante der Erfindung ist die Transponderkammer in dem Presswerkzeug im Wesentlichen zylindrisch, wobei die Überdruckaufnahmekammer dann eine Ringnut bilden kann.

In einer anderen Variante der Erfindung erweitert sich die Transponderkammer in dem Presswerkzeug zu ihrem Boden hin, insbesondere konisch. Die Einführung des Pakets aus der Schutzkappe, dem Stopfen und dem Transponder wird hierbei vorzugsweise dadurch ermöglicht, dass das Presswerkzeug erwärmt und/oder oder die Schutzkappe abgekühlt wird, was thermisch bedingt zu einer entsprechenden Ausdehnung der Transponderkammer bzw. zu einer entsprechenden Schrumpfung des Pakets aus der Schutzkappe, dem Stopfen und dem Transponder führt und dadurch das Einführen des Pakets in die Transponderkammer ermöglicht. Die Transponderkammer einerseits und die Schutzkappe andererseits sind also vorzugsweise so dimensioniert, dass die Schutzkappe nur dann in die Transponderkammer eingeführt oder aus der Transponderkammer herausgezogen werden kann, wenn die Schutzkappe abgekühlt bzw. das Presswerkzeug erwärmt ist.

Weiterhin ist allgemein zu erwähnen, dass das Volumen der Überdruckaufnahmekammer hinreichend groß sein sollte, damit der beim Einpressen des Transponders entstehende Überdruck nicht so groß wird, dass er den Transponder anschließend wieder aus der Transponderkammer herausdrückt. Das Volumen der Überdruckaufnahmekammer sollte deshalb mindestens 3% oder mindestens 5% des gesamten Volumens der sonstigen Transponderkammer betragen.

Weiterhin ist allgemein zu erwähnen, dass es sich bei dem Transponder vorzugsweise um einen RFID-Transponder handelt, der drahtlos ausgelesen werden kann.

Darüber hinaus ist zu erwähnen, dass der Transponder vorzugsweise einen Datenspeicher enthält, in dem Werkzeugkenngrößen des Presswerkzeugs abgespeichert sein können, wie beispielsweise Abmessungen des Presswerkzeugs, Fertigungstoleranzen der Abmessungen des Presswerkzeugs oder Wärmeausdehnungskoeffizienten des Materials des Presswerkzeugs. Bei dem Datenspeicher kann es sich beispielsweise um einen Nur-Lese-Speicher oder um eine Schreib-Lese-Speicher handelt, der sowohl ausgelesen als auch beschrieben werden kann.

Ferner ist allgemein zu erwähnen, dass es sich bei dem Transponder wahlweise um einen passiven Transponder ohne eigene Stromversorgung oder um einen aktiven Transponder mit einer eigenen Stromversorgung handeln kann.

Darüber hinaus ist allgemein zu erwähnen, dass das erfindungsgemäße Presswerkzeugs an sich aus Kunststoff oder aus Stahl bestehen kann.

Neben dem vorstehend beschriebenen erfindungsgemäßen Presswerkzeug umfasst die Erfindung auch ein Betriebsverfahren für eine Pressvorrichtung mit einem solchen Presswerkzeug. Hierbei wird aus dem Transponder in dem Presswerkzeugs mindestens eine Werkzeugkenngröße des Presswerkzeugs ausgelesen und die Pressparameter beim Pressen werden dann in Abhängigkeit von der ausgelesenen Werkzeugkenngröße angepasst. Die Erfindung ermöglicht also den Einsatz verschiedener Presswerkzeuge mit einer werkzeugspezifischen Anpassung der Pressparameter.

Bei den werkzeugabhängig angepassten Pressparametern kann es sich beispielsweise um die Endposition von mindestens einer Verfahrachse beim Pressen handeln. Darüber hinaus kann als Pressparameter auch das Pressprofil angepasst werden, d.h. die Presskraft-Zeit-Kennlinie oder die Pressweg-Zeit-Kennlinie. Die Presskraft-Zeit-Kennlinie gibt hierbei den Verlauf der Presskraft in Abhängigkeit von der Zeit wieder. Die Pressweg-Zeit-Kennlinie gibt dagegen den Verlauf des Pressweges in Abhängigkeit von der Zeit wieder.

Bei der aus dem Transponder ausgelesenen Werkzeugkenngrößen des Presswerkzeugs kann es sich beispielsweise um eine der folgenden Werkzeugkenngrößen Größen handeln:
- Abmessungen des Presswerkzeugs,
- Fertigungstoleranzen der Abmessungen des Presswerkzeugs,
- Wärmeausdehnungskoeffizienten des Presswerkzeugs.

Weiterhin besteht im Rahmen der Erfindung die Möglichkeit einer Überprüfung einer groben Fehljustage des Transponders in dem Presswerkzeugs, sobald die Transponderdaten ausgelesen werden.

Schließlich umfasst die Erfindung auch eine Pressvorrichtung mit dem erfindungsgemäßen Presswerkzeug. Darüber hinaus umfasst die erfindungsgemäße Pressvorrichtung auch ein Lesegerät zum Auslesen des Transponders und eine Steuereinrichtung zum Steuern eines Pressvorgangs entsprechend bestimmten Pressparametern. Die aus dem Transponder ausgelesenen Daten umfassen hierbei zumindest eine Werkzeugkenngröße des Presswerkzeugs und die Steuereinrichtung passt die Pressparameter (z.B. Presskraft-Zeit-Kennlinie) in Abhängigkeit von den Werkzeugkenngrößen an, die von dem Lesegerät aus dem Transponder ausgelesen werden.

### Kurzbeschreibung der Zeichnungen

Figur 1 ist eine Querschnittsansicht durch ein erfindungsgemäßes Presswerkzeug mit einem eingebetteten Transponder.
Figur 2 ist eine Querschnittsansicht durch die leere Transponderkammer zur Aufnahme des Transponders.
Figur 3 ist eine Querschnittsansicht entsprechend Figur 1 für ein abgewandeltes Ausführungsbeispiel mit einer konisch zulaufenden Transponderkammer.
Figur 4 ist ein Flussdiagramm zur Verdeutlichung des erfindungsgemäßen Betriebsverfahrens.
Figur 5 ist eine schematische Darstellung einer erfindungsgemäßen Pressvorrichtung.

### Detaillierte Beschreibung der Zeichnungen

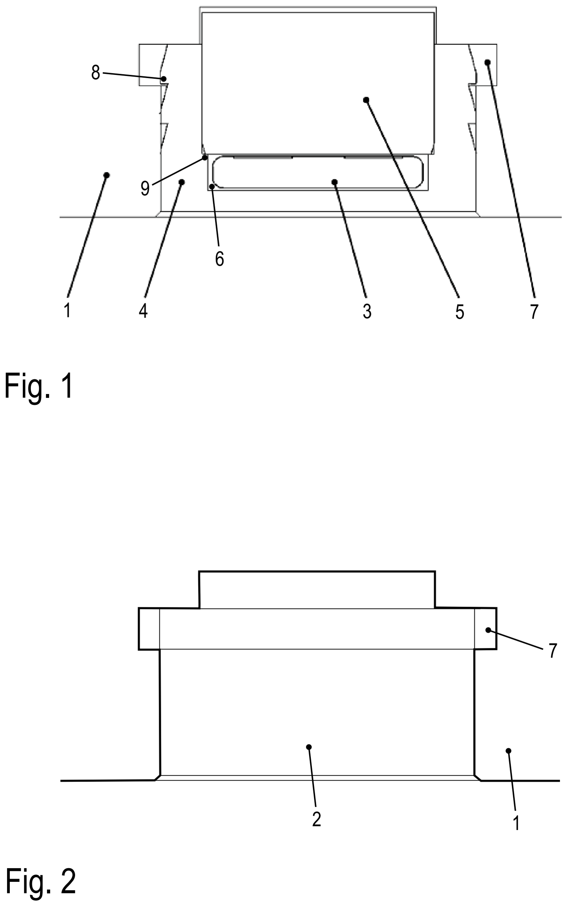

Im Folgenden wird nun zunächst ein erstes Ausführungsbeispiel eines erfindungsgemäßen Presswerkzeugs 1 beschrieben, wie es in den Figuren 1 und 2 dargestellt ist.

Vorab ist zu bemerken, dass das Presswerkzeug 1 dazu dient, um in einer Pressvorrichtung zum Pressen von Nahrungsmittelprodukten eingesetzt zu werden, wie es an sich aus dem Stand der Technik bekannt ist. Das Presswerkzeug 1 ist es deshalb hier nur schematisch dargestellt.

In dem Presswerkzeug 1 befindet sich eine Transponderkammer 2 zur Aufnahme eines Transponders 3, wobei die Transponderkammer 2 in Figur 2 im leeren Zustand dargestellt ist, wohingegen Figur 1 die Transponderkammer 2 mit dem darin angeordneten Transponder 3 zeigt.

Der Transponder 3 ist hierbei in einem Paket angeordnet, das aus einer Schutzkappe 4 und einem Stopfen 5 besteht, wobei ein Freiraum zwischen dem Stopfen 5 und der Schutzkappe 4 durch Silikon 6 ausgefüllt ist. Der Transponder 3 ist also zwischen dem Stopfen 5 und der Schutzkappe 4 vollständig in das Silikon 6 eingebettet. Diese Einbettung des Transponders 3 in dem elastischen Silikon 6 bewirkt eine mechanische Entkopplung des Transponders 3 von äußeren Einflüssen wie Temperaturausdehnung, Deformierung, etc.. Zur Montage des Transponders 3 in dem Presswerkzeug 1 wird der Transponder 3 also zunächst in die topförmige Schutzkappe 4 eingesetzt. Anschließend wird in die topförmige Schutzkappe 4 das Silikon 6 eingefüllt und die Schutzkappe 4 wird von dem Stopfen 5 verschlossen, indem der Stopfen 5 in die Schutzkappe 4 eingepresst wird.

Die Transponderkammer 2 weist an ihrem Boden eine Ringnut 7 auf, die eine Überdruckaufnahmekammer bildet. Beim Einpressen des aus dem Transponder 3, der Schutzkappe 4 und dem Stopfen 5 bestehenden Pakets in die Transponderkammer 2 entsteht nämlich in der Transponderkammer 2 ein Überdruck, der im schlimmsten Fall zu einem anschließenden ungewollten Lösen des Transponders 3 aus der Transponderkammer 2 führen kann. Die Ringnut 7 bildet deshalb eine Überdruckaufnahmekammer, die dafür sorgt, dass der Überdruck nicht zu groß wird, der beim Einpressen des aus dem Transponder 3, der Schutzkappe 4 und dem Stopfen 5 bestehenden Pakets entsteht.

Das unbeabsichtigte Lösen des Transponders 3 aus der Transponderkammer 2 wird auch dadurch verhindert, dass die Schutzkappe 4 in ihrer Außenwand mehrere Widerhaken 8 aufweist, die in Einpressrichtung versetzt angeordnet sind. Der oberste Widerhaken 8 greift hierbei formschlüssig in die Ringnut 7 ein und verankert die Schutzkappe 4 dadurch formschlüssig in der Transponderkammer 2.

Darüber hinaus ist die Schutzkappe 4 in der Transponderkammer 2 festgeklebt.

Die Verankerung der Schutzkappe 4 mit dem Transponder 3 in der Transponderkammer 2 erfolgt also reibschlüssig, kraftschlüssig und auch stoffschlüssig. Diese Verankerung durch verschiedene Verbindungsarten (stoffschlüssig, reibschlüssig, kraftschlüssig) verhindert zuverlässig, dass sich die Schutzkappe 4 mit dem Transponder 3 nach der Montage im Betrieb wieder aus der Transponderkammer 2 löst.

Schließlich zeigen die Zeichnungen einen Absatz 9 in der Innenwand der Schutzkappe 3. Der Absatz 9 bildet beim Einpressen des Stopfens 5 in die Schutzkappe 4 einen Anschlag für den Stopfen 5. Dadurch wird erreicht, dass beim Einpressen des Stopfens 5 in die Schutzkappe 4 ein definierter Aufnahmeraum für den Transponder 3 geschaffen wird.

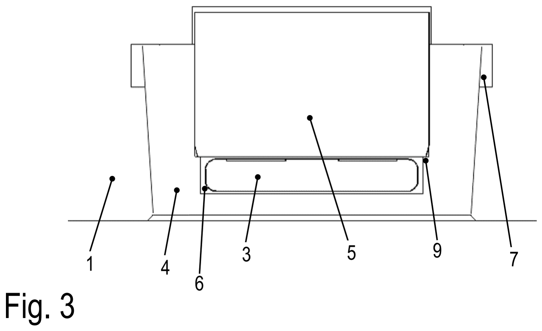

Figur 3 zeigt ein abgewandeltes Ausführungsbeispiel, das weitgehend mit den vorstehend beschriebenen und in den Figuren 1 und 2 dargestellten Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass sich die Transponderkammer 2 zu ihrem Boden hin konisch erweitert. Die Einführung des Pakets aus der Schutzkappe 4, dem Stopfen 5 und dem Transponder 3 wird hierbei dadurch ermöglicht, dass das Presswerkzeug 1 erwärmt und die Schutzkappe 4 abgekühlt wird, was thermisch bedingt zu einer entsprechenden Ausdehnung der Transponderkammer 2 und zu einer entsprechenden Schrumpfung des Pakets aus der Schutzkappe 4, dem Stopfen 5 und dem Transponder 3 führt und dadurch das Einführen des Pakets in die Transponderkammer 2 ermöglicht. Die Transponderkammer 2 einerseits und die Schutzkappe 4 andererseits sind also so dimensioniert, dass die Schutzkappe 4 nur dann in die Transponderkammer 2 eingeführt und aus der Transponderkammer 2 herausgezogen werden kann, wenn die Schutzkappe 4 abgekühlt bzw. das Presswerkzeug 1 erwärmt ist.

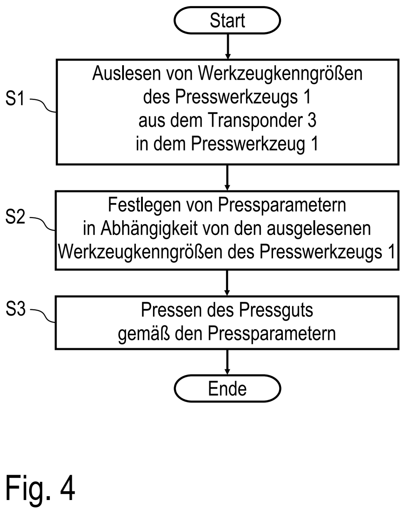

Figur 4 zeigt ein Flussdiagramm zur Verdeutlichung des erfindungsgemäßen Betriebsverfahrens.

Im ersten Schritt S1 werden zunächst Werkzeugkenngrößen (z.B. Abmessungen, Wärmeausdehnungskoeffizient des Materials des Presswerkzeugs 1) aus dem Transponder 3 ausgelesen.

In einem weiteren Schritt S2 werden dann Pressparameter (z.B. Presskraft-Zeit-Kennlinie) in Abhängigkeit von den ausgelesenen Werkzeugkenngrößen des Presswerkzeugs 1 festgelegt.

In einem nächsten Schritt S3 erfolgt dann das Pressen des Pressguts entsprechend den so festgelegten Pressparametern.

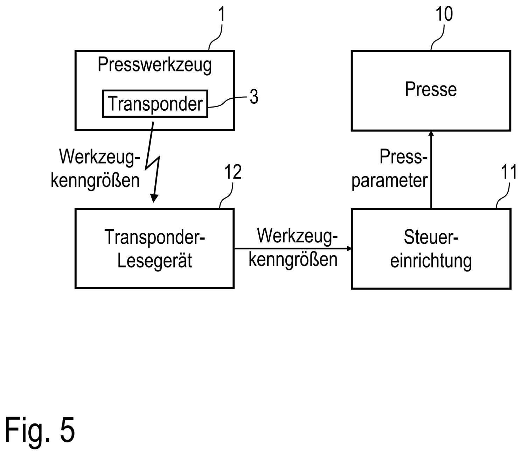

Schließlich zeigt Figur 5 eine vereinfachte schematische Darstellung einer erfindungsgemäßen Pressvorrichtung.

So weist die erfindungsgemäße Pressvorrichtung zunächst eine Presse 10 auf, die dazu dient, Nahrungsmittelprodukte entsprechend vorgegebenen Pressparametern zu pressen.

Die Pressparameter werden hierbei von einer Steuereinrichtung 11 festgelegt. Hierzu werden von einem Transponder-Lesegerät 12 Werkzeugkenngrößen des Presswerkzeugs 1 aus dem Transponder 3 ausgelesen und an die Steuereinrichtung 11 gemeldet. Die Steuereinrichtung 11 legt die Pressparameter dann in Abhängigkeit von den ausgelesenen Werkzeugkenngrößen fest. Auf diese Weise können die Pressparameter spezifisch an das jeweilige Presswerkzeug 1 angepasst werden.

Die Erfindung ist nicht auf die vorstehend beschriebenen bevorzugten Ausführungsbeispiele beschränkt. Vielmehr umfasst die Erfindung auch Varianten und Abwandlungen, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen. Die Erfindung umfasst also verschiedene Erfindungsaspekte, die unabhängig voneinander Schutz genießen.

### Vorteile der Erfindung

Die Erfindung bietet verschiedene Vorteile, die sich wie folgt zusammenfassen lassen:
- Die Erfindung verhindert das ungewollte Lösen eines Transponders aus einer Transponderkammer eines Presswerkzeugs, wie es beim Stand der Technik auftritt.
- Beim Pressen von Nahrungsmittelprodukten können die Pressparameter werkzeugspezifisch entsprechend dem jeweiligen Presswerkzeug angepasst werden.
- Durch die Nutzung der aus dem Transponder ausgelesenen Werkzeugkenngrößen kann die Presskammer in der Pressvorrichtung mit einem minimalen Spaltmaß geschlossen werden.
- Die Einbettung des Transponders in dem elastischen Material (z.B. Silikon) ermöglicht eine mechanische Entkopplung von äußeren Einflüssen wie Temperaturausdehnung, Deformierung, etc..
- Die Erfindung ermöglicht einen hygienegerechten Einbau des Transponders in dem Presswerkzeug.

### Bezugszeichenliste

- 1: Presswerkzeug
- 2: Transponderkammer in dem Presswerkzeug zur Aufnahme des Transponders
- 3: Transponder
- 4: Schutzkappe für den Transponder
- 5: Stopfen
- 6: Silikon zur Einbettung des Transponders in der Schutzkappe
- 7: Ringnut der Transponderkammer als Überdruckaufnahmekammer
- 8: Widerhaken in der äußeren Mantelfläche der Schutzkappe
- 9: Absatz in der Innenwand der Schutzkappe als Anschlag zur Begrenzung der Einpressbewegung des Stopfens
- 10: Presse
- 11: Steuereinrichtung der Presse
- 12: Transponder-Lesegerät

## Patentansprüche

1. Presswerkzeug (1) für eine Pressvorrichtung zum Pressen von Pressgut, insbesondere zum Pressen von Nahrungsmittelprodukten, mit
a) einer Transponderkammer (2) in dem Presswerkzeug (1) und
b) einem Transponder (3), der in der Transponderkammer (2) des Presswerkzeugs (1) angeordnet ist,
**dadurch gekennzeichnet,**
c) **dass** die Transponderkammer (2) im montierten Zustand des Transponders (3) nicht vollständig ausgefüllt ist, sondern eine Überdruckaufnahmekammer (7) aufweist, um den beim Einpressen des Transponders (3) in die Transponderkammer (2) entstehenden Überdruck aufzunehmen.

2. Presswerkzeug (1) nach Anspruch 1, **dadurch gekennzeichnet, dass** die Überdruckaufnahmekammer (7) die Transponderkammer (2) am Boden der Transponderkammer (2) umgibt, insbesondere als Ringnut (7).

3. Presswerkzeug (1) nach einem der vorhergehenden Ansprüche, **dadurch gekennzeichnet, dass** der Transponder (3) in einer topfförmigen Schutzkappe (4) angeordnet ist, die in die Transponderkammer (2) des Presswerkzeugs (1) eingeführt ist und den Transponder (3) mit ihrem Boden nach außen abdeckt.

4. Presswerkzeug (1) nach Anspruch 2 und Anspruch 3, **dadurch gekennzeichnet, dass** die Schutzkappe (4) an ihrem Umfangsrand außen mindestens ein Formschlusselement (8) aufweist, das im montierten Zustand eine formschlüssige Verbindung mit einem entsprechenden komplementären Formschlusselement (7) in der Transponderkammer (2) herstellt und die Schutzkappe (4) dadurch formschlüssig in der Transponderkammer (2) verankert.

5. Presswerkzeug (1) nach Anspruch 4, **dadurch gekennzeichnet,**
a) **dass** das Formschlusselement (8) an der Schutzkappe (4) ein Widerhaken ist (8), und/oder
b) **dass** das komplementäre Formschlusselement (7) in der Transponderkammer (2) die Überdruckaufnahmekammer (7) ist.

6. Presswerkzeug (1) nach einem der Ansprüche 3 bis 5, **dadurch gekennzeichnet, dass** der in der Schutzkappe (4) eingelegte Transponder (3) innen von einem Stopfen (5) abgedeckt ist, der in die topfförmige Schutzkappe (4) hineingesteckt ist.

7. Presswerkzeug (1) nach einem der Ansprüche 3 bis 6, **dadurch gekennzeichnet, dass** der Transponder (3) in der Schutzkappe (4) in ein Medium (6) eingebettet ist, insbesondere in ein elastisches Medium (6), insbesondere in Silikon (6).

8. Presswerkzeug (1) nach einem der Ansprüche 6 bis 7, **dadurch gekennzeichnet,**
a) **dass** ein Anschlag (9) vorgesehen ist, der beim Einpressen des Stopfens (5) in die Schutzkappe (4) die Einpressbewegung des Stopfens (5) begrenzt,
b) **dass** der Anschlag (9) vorzugsweise an der Innenwand der Schutzkappe (4) oder an der Außenwand des Stopfens (5) oder an einer Einpresshilfe angeordnet ist.

9. Presswerkzeug (1) nach einem der Ansprüche 6 bis 8, **dadurch gekennzeichnet, dass** die Schutzkappe (4), der Transponder (3) und der Stopfen (5) ein Paket bilden, das in die Transponderkammer (2) in dem Presswerkzeug (1) eingepresst und/oder eingeklebt ist.

10. Presswerkzeug (1) nach einem der vorhergehenden Ansprüche, **dadurch gekennzeichnet,**
a) **dass** sich die Transponderkammer (2) in dem Presswerkzeug (1) zu ihrem Boden hin erweitert, insbesondere konisch, und/oder
b) **dass** Transponderkammer (2) einerseits und die Schutzkappe (4) andererseits vorzugsweise so dimensioniert sind, dass die Schutzkappe (4) nur dann in die Transponderkammer (2) eingeführt oder aus der Transponderkammer (2) herausgezogen werden kann, wenn die Schutzkappe (4) abgekühlt und thermisch geschrumpft und/oder das Presswerkzeug (1) erwärmt und thermisch gedehnt ist.

11. Presswerkzeug (1) nach einem der vorhergehenden Ansprüche, **dadurch gekennzeichnet,**
a) **dass** das Volumen der Überdruckaufnahmekammer (7) mindestens 3% oder mindestens 5% des gesamten Volumens der Transponderkammer (2) beträgt, und/oder
b) **dass** der Transponder (3) ein RFID-Transponder (3) ist, und/oder
c) **dass** der Transponder (3) ein passiver Transponder (3) ohne eigene Stromversorgung oder ein aktiver Transponder (3) mit einer eigenen Stromversorgung ist, und/oder
d) **dass** das Presswerkzeug (1) im Wesentlichen aus Kunststoff oder aus Stahl besteht.

12. Betriebsverfahren für eine Pressvorrichtung zum Pressen von Pressgut, insbesondere zum Pressen von Nahrungsmittelprodukten, mit den folgenden Schritten:
a) Pressen des Pressguts mit einem Presswerkzeug (1) entsprechend vorgegebenen Pressparametern, **gekennzeichnet durch** folgende Schritte:
b) Auslesen von mindestens einer Werkzeugkenngröße des Presswerkzeugs (1) aus einem Transponder (3) in dem Presswerkzeug (1), und
c) Anpassen der Pressparameter in Abhängigkeit von der ausgelesenen Werkzeugkenngröße.

13. Betriebsverfahren nach Anspruch 12, **dadurch gekennzeichnet, dass** die werkzeugabhängig angepassten Pressparameter mindestens einen der folgenden Parameter umfassen:
a) Endposition von mindestens einer Verfahrachse beim Pressen,
b) Pressprofil als Presskraft-Zeit-Kennlinie oder Pressweg-Zeit-Kennlinie.

14. Betriebsverfahren nach Anspruch 12 oder 13, **dadurch gekennzeichnet, dass** die aus dem Transponder (3) ausgelesene Werkzeugkenngröße mindestens eine der folgenden Werkzeugkenngrößen des Presswerkzeugs (1) umfasst:
a) Abmessungen des Presswerkzeugs (1),
b) Fertigungstoleranzen der Abmessungen des Presswerkzeugs (1),
c) Wärmeausdehnungskoeffizienten des Presswerkzeugs (1).

15. Betriebsverfahren nach einem der Ansprüche 12 bis 14, **gekennzeichnet durch** folgende Schritte:
a) Empfangen von Signalen von dem Transponder (3), und
b) Ermittlung einer korrekten oder inkorrekten Justierung des Transponders (3) in dem Presswerkzeug (1) anhand der empfangenen Signale.

16. Pressvorrichtung zum Pressen von Pressgut, insbesondere zum Pressen von Nahrungsmittelprodukten, mit
a) einem Presswerkzeug (1) mit einem Transponder (3), insbesondere nach einem der Ansprüche 1 bis 11,
b) einem Transponder-Lesegerät (12) zum Auslesen des Transponders (3), und
c) einer Steuereinrichtung (11) zum Steuern eines Pressvorgangs entsprechend bestimmten Pressparametern,
**dadurch gekennzeichnet,**
d) **dass** auf dem Transponder (3) mindestens eine Werkzeugkenngröße des Presswerkzeugs (1) gespeichert ist, und
e) **dass** die Steuereinrichtung (11) die Pressparameter in Abhängigkeit von der Werkzeugkenngröße anpasst, die von dem Transponder-Lesegerät (12) aus dem Transponder (3) ausgelesen wird.
